(19) Europäisches Patentamt
European Patent Office
Office européen des brevets

(11) Veröffentlichungsnummer : **0 162 326**
**B1**

(12) # EUROPÄISCHE PATENTSCHRIFT

(45) Veröffentlichungstag der Patentschrift : **03.01.90**

(21) Anmeldenummer : **85105021.1**

(22) Anmeldetag : **25.04.85**

(51) Int. Cl.⁵ : **A 01 N 57/20** // (A01N57/20, 57:20, 47:36, 47:30, 43:70, 43:50, 39:04, 39:02)

(54) **Herbizide Mittel.**

(30) Priorität : **02.05.84 DE 3416201**

(43) Veröffentlichungstag der Anmeldung : **27.11.85 Patentblatt 85/48**

(45) Bekanntmachung des Hinweises auf die Patenterteilung : **03.01.90 Patentblatt 90/01**

(84) Benannte Vertragsstaaten : **AT BE DE FR GB IT NL**

(56) Entgegenhaltungen :
**EP-A- 0 009 620**
**EP-A- 0 106 114**
**DE-A- 2 848 224**
**DE-A- 2 856 260**
**US-A- 4 394 506**
**US-A- 4 404 012**

(73) Patentinhaber : **HOECHST AKTIENGESELLSCHAFT**
**Postfach 80 03 20**
**D-6230 Frankfurt am Main 80 (DE)**

(72) Erfinder : **Bauer, Klaus, Dr.**
**Kolpingstrasse 7**
**D-6054 Rodgau (DE)**
Erfinder : **Bieringer, Hermann, Dr.**
**Eichenweg 26**
**D-6239 Eppstein/Ts. (DE)**
Erfinder : **Hacker, Erwin, Dr.**
**Herderstrasse 21**
**D-6203 Hochheim am Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 162 326 B1**

Jouve, 18, rue St-Denis, 75001 Paris, France

## Beschreibung

Gegenstand der vorliegenden Erfindung sind herbizide Mittel, dadurch gekennzeichnet, daß sie einen Wirkstoff der Formel I,

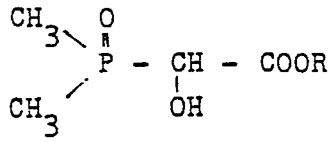

(I)

worin R = Wasserstoff oder Alkyl, das gegebenenfalls ein oder mehrfach durch Halogen, Hydroxy, ($C_1$-$C_4$)Alkoxy oder ($C_1$-$C_4$)Alkoxycarbonyl substituiert ist, bedeutet, oder deren Salze in Kombination mit einer Verbindung der Formel II,

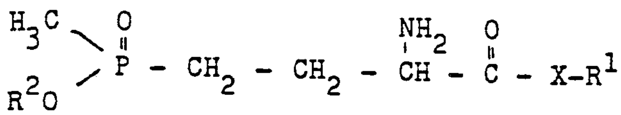

(II)

worin

X = O oder NH, wobei im falle X = 0

$R^1$ = Wasserstoff, ($C_1$-$C_4$)Alkyl, gegebenenfalls substituiertes Ammonium, oder ein Metall-Kation und im Falle X = NH

$R^1$ = der rest-$CH(CH_3)$—CONH—$CH(CH_3)$—COOH und dessen Salze bedeutet, und unabhängig von der Bedeutung von X

$R^2$ = Wasserstoff, gegebenenfalls substituiertes Ammonium oder ein Metall-Kation bedeuten, oder deren Säureadditionssalze

oder mit einer Verbindung der Formel III

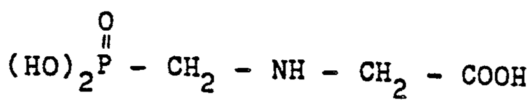

(III)

oder deren Salze und Esterverbindungen

oder mit einer Verbindung der Formel (IV),

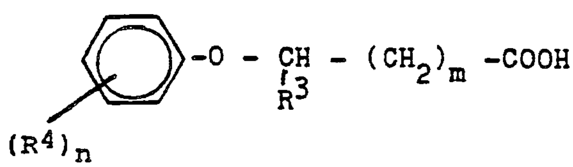

(IV)

worin

$R^3$ = H oder methyl

$R^4$ = bei gleicher oder verschiedener Bedeutung Methyl oder Chlor

n = die Zahl 2 oder 3 und

m = die Zahl 0 oder 2 bedeutet,

oder deren Salze und Esterverbindungen

oder mit einer Verbindung der Formel V,

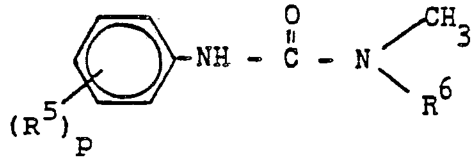

(V)

worin

$R^5$ = bei gleicher oder verschiedener Bedeutung Chlor, Brom Methyl oder Methoxy

$R^6$ = Methyl oder Methoxy und

p = die Zahl 1 oder 2 bedeutet,

oder mit einer Verbindung der Formel VI,

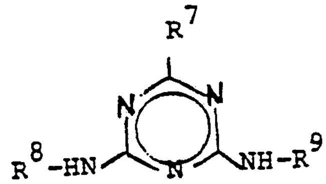

(VI)

worin
$R^7$ = Chlor, Methylthio oder Methoxy
$R^8$, $R^9$ = unabhängig voneinander $(C_1\text{-}C_4)$Alkyl bedeuten,
oder mit einer Verbindung der Formel VII,

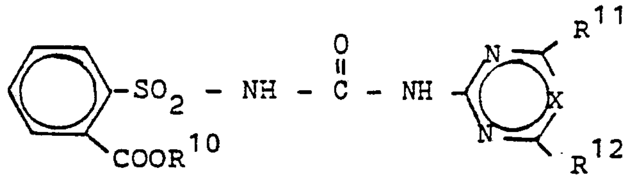

(VII)

worin
$R^{10}$ = $(C_1\text{-}C_4)$Alkyl bedeutet
$R^{11}$, $R^{12}$ = unabhängig voneinander $(C_1\text{-}C_2)$Alkyl oder $(C_1\text{-}C_2)$Alkoxy und
X = CH oder N bedeutet,
oder mit einer Verbindung der Formel VIII,

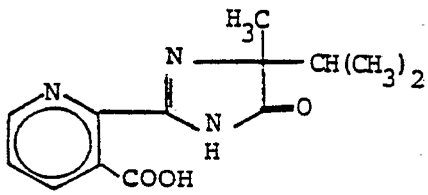

(VIII)

oder deren Salze, enthalten.

Die Verbindungen der Formel I sind in der DE-OS 32 38 958 beschrieben. Sie verfügen über eine systemische Herbizidwirkung. Bei der Kombination der Verbindungen der Formel I mit einer der Verbindungen der Formeln II bis VIII zeigte sich überraschenderweise eine auffallende synergistische Wirkungssteigerung. Es wurde außerdem eine unerwartete Erhöhung der Wirkungsgeschwindigkeit beobachtet.

Von den Salzen der Verbindungen der Formel I, die sich von der freien Säure durch Ersatz von R = H durch ein Kation ableiten kommen beispielsweise in Betracht : die Alkali- und Erdalkalisalze, Salze mit Ammonium oder Phosphonium, das jeweils mono-, di-, tri- oder tetrasubstituiert sein kann, wobei als Substituenten Alkyl, insbesondere $(C_1\text{-}C_{20})$Alkyl, Phenyl, Benzyl, Heteroaryl, hiervon insbesondere Pyridyl und Pyrimidinyl, die alle durch Hydroxy, $(C_1\text{-}C_4)$Alkoxy, $(C_1\text{-}C_4)$Alkylthio oder Mono oder Di$(C_1\text{-}C_4)$Alkylamino substituiert sein können, in Frage kommen, oder Trialkylsulfonium- oder Trialkylsulfoxonium-Salze.

Die Formel I umfaßt alle Stereoisomeren (L- und D-Formen).

Von den Verbindungen der Formel I sind als besonders bevorzugt zu nennen : Die freie Säure (R = H, Verbindung Ia), der Methylester (Verbindung Ib, R = $CH_3$), das Natrium- oder Ammoniumsalz von verbindung Ia (Verbindung Ic, R = Na oder $NH_4$).

Die Verbindungen der Formel II sind in der US-PS 4 168 936 sowie in der US-PS 4 309 208 beschrieben. Die Formel II umfaßt hierbei sowohl die racemischen Verbindungen wie auch alle optischen Isomeren. So kann die Verbindung der Formel II mit $R^1$ = H, Alkyl oder Kation als L oder D-Form vorliegen. Im Falle $R^1$ = —$CH(CH_3)$—CONH—$CH(CH_3)$—COOH sind weitere optische Isomere möglich. Als Substituenten für Ammonium kommen die für Verbindung der Formel I genannten infrage. Als Metallionen sind in erster Linie die Alkali und Erdalkaliionen wie Na, K, Mg, Ca-Ionen zu nennen. Als Salze für den rest $R_1$ = $CH(CH_3)$—CONH—$CH(CH_3)$—COOH kommen beispielsweise Alkali-, Erdalkalisalze oder die obengenannten Ammoniumsalze, insbesondere das Natriumsalz in Betracht. Als Säureadditionssalze kommen Salze mit anorganischen Säuren wie HCl, HBr, $H_2SO_4$, $H_3PO_4$ und Salze mit organischen Säuren wie $(C_1\text{-}C_4)$Carbonsäuren, chlorierte Essigsäuren, Weinsäure, Zitronensäure in Betracht.

Von den Verbindungen der Formel II sind als bevorzugt zu nennen das Mono-Ammoniumsalz (Verbindung IIa, $R^1$ = H, $R^2$ = $NH_4$, X = 0), die freie Säure, bekannt unter dem Namen Phosphinothricin, (Verbindung IIb, $R^1$, $R^2$ = H, X = 0 und deren Hydrochlorid-Additionssalz (mit 1 Mol HCl) oder die Na, K-

Salze ($R^1$, $R^2$ = Na, K, X = 0). Besonders bevorzugt ist Verbindung IIa.

Die Verbindung der Formel III ist unter dem Namen Glyphosate bekannt. Sie kann in Form ihrer Salze vorliegen, wobei das Isopropylammoniumsalz (Verbindung IIIa) von besonderer Bedeutung ist. Als Salze kommen ferner beispielsweise in Frage Metallsalze wie Alkali- und Erdalkalisalze, gegebenenfalls substituierte Phosphonium- oder Ammoniumsalze, und Sulfonium oder Sulfoxoniumsalze, hiervon beispielsweise Trialkylsulfoxoniumsalze wie insbesondere das Trimethylsulfoxoniumsalz. Als Ester sind insbesondere ($C_1$-$C_4$)Alkylester von Interesse. Als Substituenten für Ammonium und Phosphonium kommen die für die Verbindungen der in Formel I genannten Reste in Betracht.

Als Salze für die Verbindungen der Formel IV sind beispielsweise zu nennen : die Alkali- und Erdalkalisalze, gegebenenfalls substituierte (Substituenten s. unter Formel I) Ammoniumsalze. Als Ester kommen insbesondere die ($c_1$-$C_8$)Alkyl- oder die Allylester in Betracht.

Von den Verbindungen der Formel IV seien insbesondere genannt : 2,4-D(2,4-Dichlorphenoxyessigsäure, Verbindung IVa), Butoxone (2,4,5-Trichlorphenoxy-essigsäure), MCPA (2-Methyl-4-chlorphe-noxy-essigsäure, Verbindung IVb), MCPP [2-(2-Methyl-4-chlor-phenoxy)propionsäure, Verbindung IVc], Dichlorprop[2-(2,4-Dichlor-phenoxy)-propionsäure] oder MCPB [4-(4-Chlor-2-methyl-phenoxy)buttersäure] oder deren Salze und Ester.

Von den Verbindungen der Formel V werden insbesondere die Verbindungen Diuron (N-3,4-Dichlorphenyl-N',N'-dimethylharnstoff) und Linuron (N-3,4-Dichlorphenyl-N'-methoxy-N'-methylharnstoff) eingesetzt.

Bevorzugt von den Verbindungen der Formel VI sind : Atrazin (2-Ethylamino-4-chlor-6-isopropylamino-S-triazin), Simazin (4,6-Bis-ethylamino-2-chlor-s-triazin), Terbuthylazin (6-Ethylamino-2-tert.-butylamino-4-chlor-s-triazin) Ametryn (2-Ethylamino-4-isopropylamino-6-methylthio-s-triazin) und Prometryn (2,4-Bis-isopropylamino-6-methylthio-s-triazin).

Von den Verbindungen der Formel VII ist insbesondere die Verbindung mit $R^{10}$, $R^{11}$, $R^{12}$ = $CH_3$ und X = CH von Interesse ; diese Verbindung ist unter dem Namen Sulfometuron-methyl bekannt.

Für die Verbindungen der Formel VIII kommen alle üblichen Salze wie Alkalimetallsalze, gegebenenfalls substituierte Ammoniumsalze, insbesondere das Isopropylammoniumsalz infrage. Formel VIII umfaßt alle Stereoisomeren.

Die erfindungsgemäßen Wirkstoffkombinationen erfassen ein breites Unkrautspektrum. Sie eignen sich beispielsweise zur Bekämpfung von annuellen und perennierenden Unkräutern wie beispielsweise Agropyron, Paspalum, Cynodon, Imperata, Pennisetum, Convolvulus, Cirsium, Rumex und andere.

Die erfindungsgemäßen Kombinationen lassen sich zur selektiven Bekämpfung von Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten « no till » bzw. « zero till »- Verfahren eingesetzt werden. Sie können aber auch nichtselektiv auf Wegen, Plätzen, Industrieanlagen etc. angewendet werden, um diese Flächen von unerwünschtem Pflanzenwuchs freizuhalten.

Die Mischungsverhältnisse der Verbindungen der Formel I zu den Verbindungen der Formeln II, III, IV, V, VI, VII oder VIII können innerhalb weiter Grenzen insbesondere zwischen etwa 80 : 1 bis 1 : 10 schwanken. Die Wahl des Mischungsverhältnisses ist abhängig von verschiedenen Parametern wie der Art der Mischungspartner, Entwicklungsstadium der Unkräuter und Unkrautspektrum. Vorzugsweise werden Mischungsverhältnisse von 40 : 1 bis 1 : 5 gewählt.

Die erfindungsgemäßen Kombinationen können sowohl in Form von Mischformulierungen — benetzbare Pulver, Emulsionskonzentrate — vorliegen, die dann in üblicher Weise mit Wasser verdünnt zur Anwendung gebracht werden ; sie können aber auch als sogenannte Tankmischungen durch gemeinsame Verdünnung der getrennt formulierten Komponenten mit Wasser hergestellt werden.

Die Aufwandmengen des Herbizids der Formel I in den Wirkstoffmischungen variieren im allgemeinen zwischen 0,5 und 4,0 kg/ha, während die Aufwandmengen der Verbindungen der Formeln II bis VIII im Bereich zwischen 0,01 und 5,0 kg/ha liegen können, speziell für

Verbindungen der Formel II zwischen 0,1 und 2,0 kg a.i./ha
Verbindungen der Formel III zwischen 0,1 und 2,0 kg a.i./ha
Verbindungen der Formel IV zwischen 0,1 und 2,0 kg a.i./ha
Verbindungen der Formel V zwischen 0,1 und 2,0 kg a.i./ha
Verbindungen der Formel VI zwischen 0,5 und 5,0 kg a.i./ha
Verbindungen der Formel VII zwischen 0,01 u. 0,5 kg a.i./ha
und
Verbindungen der Formel VIII zwischen 0,01 u. 0,5 kg a.i./ha

Die erfindungsgemäßen Mittel können in den üblichen, dem Fachmann geläufigen Zubereitungen, z. B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die Wirkstoffe im allgemeinen in Konzentrationen von 2 bis 95 Gew.-%.

Benetzbare Pulver sind in Wasser gleichmäßig dispergierbare Präparate, die neben den Wirkstoffen außer einem Verdünnungs- oder Inertstoff noch Netzmittel, z. B. polyoxethylierte Alkylphenole, polyoxethylierte Oleyl- oder Stearylamine, Alkyl- oder Alkylphenyl-sulfonate und Dispergiermittel, z. B. ligninsulfonsaures Natrium, dinaphthylmethandisulfonsaures Natrium oder auch oleylmethyltaurinsaures Natrium enthalten.

Emulgierbare Konzentrate werden durch Auflösen des Wirkstoffgemisches in einem organischen Lösungsmittel, z. B. Butanol, Cyclohexanon, Dimethylformamid, Xylol oder auch höhersiedenden Aromaten und Zusatz eines nichtionischen Netzmittels, beispielweise eines polyoxäthylierten Alkylphenols oder eines polyoxäthylierten Oleyl- oder Stearylamins, erhalten.

In benetzbaren Pulvern variiert die Gesamt-Wirkstoffkonzentration zwischen etwa 10 % und 95 %, der Rest besteht aus den oben angegebenen Formulierungszusätzen. Bei emulgierbaren Konzentraten beträgt die Wirkstoffkonzentration etwa 10 % bis 80 %. Staubförmige Formulierungen enthalten meistens 5 % bis 20 % an Wirkstoffen, versprühbare Lösungen etwa 2 % bis 20 %. Bei Granulaten hängt der Wirkstoffgehalt zum Teil davon ab, in welcher From (flüssig oder fest) die Wirkstoffe vorliegen und welche Granulierhilfsmittel, Füllstoffe usw. verwendet werden.

Zur Anwendung werden die handelsüblichen Konzentrate gegebenenfalls in üblicher Weise verdünnt, z. B. bei benetzbaren Pulvern und emulgierbaren Konzentration mittels Wasser.

Staubförmige und granulierte Zubereitungen sowie versprühbare Lösungen werden vor der Anwendung nicht mehr mit weiteren inerten Stoffen verdünnt.

## A. Formulierungsbeispiele

a) Ein Stäubemittel wird erhalten, indem nach 10 Gewichtsteile Wirkstoffgemisch und 90 Gewichtsteile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffgemisch, 64 Gewichtsteile kaolinhaltigen Quarz als Inertstoff, 10 Gewichtsteile ligninsulfonsaures Kalium und 1 Gewichtsteile oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffgemisch mit 6 Gewichtsteilen Alkylphenolpolyglykolether (®Triton X 207), 3 Gewichtsteilen Isotridecanolpolyglykolether (8 AeO) und 71 Gewichtsteilen paraffinischem Mineralöl (Siedebereich z. B. Ca. 255 bis über 377 °C) mischt und in einer Reibkugelmühle auf eine Feinheit von unter 5 Mikron vermahlt.

d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol (10 AeO) als Emulgator.

## B. Biologische Beispiele

Der Nachweis des Synergismus in den nachfolgenden Beispielen ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades erfolgt nach der Formel von S. R. Colby (vgl. Calculating synergistic and antagonistic responses of herbicide combinations, Weeds, 15, 1967, S. 20 bis 22).

Diese Formel lautet:

$$E = X + Y - \frac{X \cdot Y}{100}$$

wobei

X = % Schädigung durch Herbizid A bei x kg/ha Aufwandmenge,
X = % Schädigung durch Herbizid B bei y kg/ha Aufwandmenge,
E = % die erwartete Schädigung der Herbizide A + B bei x + y kg/ha Aufwandmenge bedeuten.

Ist die tatsächliche Schädigung größer als berechnet, so ist die Wirkung der Wirkstoffkombination mehr als additiv, d. h., es liegt ein synergistischer Effekt vor. Dies wird anhand der biologischen Beispiele in den nachfolgenden Tabellen demonstriert, wobei in den rechten Spalten bei den Ergebnissen der Kombinationsbehandlungen in Klammern die aus obiger Formel errechneten additiven Wirkungen angegeben sind.

### Beispiel 1

Samen verschiedener Ungräser und Unkräuter wurden in sandiger Lehmerde in Plastiktöpfen (∅ = 9 cm) ausgesät und unter guten Wachstumsbedingungen im Gewächshaus 3-4 Wochen angezogen. Anschließend wurden die als wäßrige Lösungen formulierten Verbindungen alleine sowie in Kombination in Form von versprühbaren Lösungen auf die oberirdischen Pflanzenteile gesprüht. Die verwendete Wassermenge entsprach dabei 400 l/ha.

Nach ca. 3 Wochen Standzeit im Gewächshaus unter optimalen Wachstumsbedingungen wurde die herbizide Wirkung visuell bonitiert.

Die Ergebnisse zeigen, daß mit der Wirkstoffkombination eine unerwartet hohe herbizide Wirksamkeit erreicht wurde, die wesentlich besser ist, als auf Grund der Summe der Einzelwirkung der Wirkstoffe erwartet werden konnte.

Tabelle 1

| Herbizid | Dosis kg a.i./ha | Herbizide Wirkung in % AVF | ALM |
|---|---|---|---|
| Ia | 0.25 | 5 | 0 |
| | 0.5 | 35 | 35 |
| | 1.0 | 45 | 78 |
| IIa | 0.125 | 5 | 15 |
| | 0.250 | 10 | 40 |
| Ia + IIa | 0.25 + 0.125 | 45(9,8) | 50(15) |
| | 0.50 + 0.125 | 70(38,2) | 70(44,7) |
| | 1.0 + 0.125 | 75(47,7) | 100(81) |
| | 0.25 + 0.25 | 65(14,5) | 50(40) |
| | 0.50 + 0.25 | 70(41,5) | 78(61) |
| | 1.0 + 0.25 | 83(50,5) | 98(87) |

Ia : Verbindung der Formel I mit R = H
IIa : Verbindung der Formel II mit $R^1$ = H, $R^2$ = $NH_4$, X = O

Beispiel 2

Samen verschiedener Ungräser und Unkräuter wurden in sandiger Lehmerde in Plastiktöpfen (Ø 9 cm) ausgesät und unter guten Wachstumsbedingungen im Gewächshaus 3-4 Wochen angezogen. Anschließend wurden die als Spritzpulver bzw. wäßrige Lösungen formulierten Verbindungen in Form von wäßrigen Suspensionen bzw. versprühbaren Lösungen auf die oberirdischen Pflanzenteile gesprüht. Die verwendete Wassermenge entsprach dabei 300 l/ha.

Die herbizide Wirkung wurde 3 Wochen nach der Applikation bonitiert. Die Ergebnisse, wie in Tabelle 2 dargestellt, zeigen die außerordentlich gute Wirksamkeit der erfindungsgemäßen Kombination.

Tabelle 2

| Herbizid | Dosis kg a.i./ha | Herbizide Wirkung in % AVF | ALM | LOM |
|---|---|---|---|---|
| Ib | 0.25 | 15 | 40 | 35 |
| | 0.5 | 55 | 75 | 90 |
| IIIa | 0.25 | 55 | 70 | 75 |
| Ib + IIIa | 0.25 + 0.25 | 85(61,7) | 90(82) | 99(83,7) |
| | 0.5 + 0.25 | 97(71,7) | 99(92,5) | 100(97,5) |

Ib = Verbindung der Formel I mit R = $CH_3$
IIIa = Isopropylammoniumsalz der Verbindung der Formel III
AVF = Avena fatua
ALM = Alopecurus myosuroides
LOM = Lolium multiflorum

Beispiel 3

Rhizome bzw. Wurzelstücke verschiedener Unkräuter wurden in sandiger Lehmerde in Töpfen von 13 cm Durchmesser ausgesät und im Gewächshaus bis zur Bestockung angezogen. Die als wäßrige Lösungen bzw. als Emulsionskonzentrate formulierten erfindungsgemäßen Kombinationen wurden in 400 l/ha auf die oberirdischen Grünteile der Versuchspflanzen gesprüht. Die Erfolgsbonitur wurde nach 14 Tagen durchgeführt.

Die Ergebnisse belegen die starke synergistische Wirkung der Kombinationen gegenüber perennierenden Unkräutern wie Cynodon dactylon (CND), Agropyron repens (AGR) und Cyperus esculentus (CYE) (siehe Tabelle 3).

Beispiel 4

Nach gleicher Methode wie in Beispiel 3 wurden die Verbindungen alleine und in Kombination auf bestockte perennierende Unkräuter appliziert. Die Boniturergebnisse in Tabelle 4, 43 Tage nach Behandlung festgestellt, belegen wiederum die synergistische Wirkung der Kombination.

Beispiel 5

Nach gleicher Methode wie in Beispiel 3 wurden die Verbindungen alleine und in Kombination auf perennierende Gräser im Stadium der Bestockung appliziert. 6 Wochen später wurden die Ergebnisse bonitiert (Tabelle 5). Dabei zeigte sich, daß die erfindungsgemäßen Herbizidkombinationen zu einer unerwartet starken synergistischen Steigerung der Dauerwirkung führen.

Tabelle 3

| Produkt | Dosis kg a.i./ha | Herbizide Wirkung in % CND | AGR | CYE |
|---|---|---|---|---|
| IIa | 0.25 | 50 | 60 | 20 |
| Ia | 4.0 | 75 | 50 | - |
| | 2.0 | 70 | 40 | - |
| | 1.0 | 60 | 30 | - |
| | 0.5 | 30 | 20 | - |
| Ia + IIa | 4.0 + 0.25 | 95(87,5) | 95(80) | - |
| | 2.0 + 0.25 | 95(85) | 90(76) | - |
| | 1.0 + 0.25 | 90(80) | 85(72) | - |
| | 0.5 + 0.25 | 90(65) | 75(68) | - |
| Ic | 4.0 | 80 | 40 | 40 |
| | 2.0 | 60 | 30 | 15 |
| | 1.0 | 30 | 15 | 0 |
| | 0.5 | 20 | 10 | 0 |
| Ic + IIa | 4.0 + 0.25 | 98(90) | 96(86) | 60(52) |
| | 2.0 + 0.25 | 98(80) | 95(72) | 40(32) |
| | 1.0 + 0.25 | 97(65) | 90(66) | 40(20) |
| | 0.5 + 0.25 | 95(60) | 90(64) | 35(20) |

(Siehe Tabelle 3 Seite 8 f.)

Tabelle 3 (Fortsetzung)

| Produkt | Dosis kg a.i./ha | Herbizide Wirkung in % CND | AGR | CYE |
|---|---|---|---|---|
| Ib | 4.0 | 55 | 35 | - |
| | 2.0 | 50 | 25 | - |
| | 1.0 | 45 | 20 | - |
| | 0.5 | 40 | 20 | - |
| Ib + IIa | 4.0 + 0.25 | 95(77) | 85(74) | - |
| | 2.0 + 0.25 | 90(75) | 80(70) | - |
| | 1.0 + 0.25 | 90(72,5) | 70(68) | - |
| | 0.5 + 0.25 | 80(70) | 60(68) | - |

Ic = Na-Salz der Verbindung Ia (R = Na)
CND = Cynodon dactylon
AGR = Agropyron repens
CYE = Cyperus esculentus

Tabelle 4

| Produkt | Dosis kg a.i./ha | Herbizide Wirkung in % CND | AGR | CYE |
|---|---|---|---|---|
| IIIa | 0.25 | 65 | 58 | 63 |
| Ia | 0.5 | 78 | 33 | 35 |
| | 0.25 | 43 | 5 | 18 |
| Ia + IIIa | 0.5 + 0.25 | 98(92) | 86(72) | 83(76) |
| | 0.25+ 0.25 | 85(81) | 75(60) | 80(70) |

Tabelle 5

| Produkt | Dosis kg a.i./ha | Herbizide Wirkung in % AGR | CND |
|---|---|---|---|
| Ib | 1.0 | 65 | 40 |
| | 0.5 | 30 | 30 |
| Atrazin | 1.0 | 42 | 30 |
| | 0.5 | 20 | 5 |
| Diuron | 1.0 | 35 | 40 |
| | 0.5 | 15 | 10 |

Tabelle 5 (Fortsetzung)

| Produkt | Dosis kg a.i./ha | Herbizide Wirkung in % AGR | CND |
|---|---|---|---|
| Ib + Atrazin | 0.5 + 0.5 | 85(44) | 75(33) |
| | 1.0 + 0.5 | 95(72) | 90(43) |
| | 0.5 + 1.0 | 90(59) | 95(51) |
| Ib + Diuron | 0.5 + 0.5 | 80(40) | 75(37) |
| | 1.0 + 0.5 | 93(70) | 90(46) |
| | 0.5 + 1.0 | 85(45) | 90(58) |

Atrazin = 2-Ethylamino-4-chlor-6-isopropylamin-s-triazin
Diuron = N-3,4-Dichlorphenyl-N',N'-dimethyl-harnstoff.

Beispiel 6

Samen verschiedener Ungräser und Unkräuter wurden in sandiger Lehmerde in Plastiktöpfen von 9 cm Durchmesser ausgesät und unter guten Wachstumsbedingungen im Gewächshaus 3-4 Wochen angezogen. Anschließend wurden die als Spritzpulver, Emulsionskonzentrate bzw. wäßrige Lösungen formulierten Verbindungen in Form von wäßrigen Suspensionen, Emulsionen oder versprühbaren Lösungen auf die oberirdischen Pflanzenteile gesprüht. Die verwendete Wassermenge entsprach dabei umgerechnet 600 l/ha.

Die herbizide Wirkung wurde 3 Wochen nach der Applikation im Vergleich zu unbehandelten Kontrollen visuell bonitiert. Die Ergebnisse, wie in Tabelle 6 dargestellt, zeigen die außerordentlich gute Wirksamkeit der erfindungsgemäßen Kombination und deren Überlegenheit über die Einzelwirkstoffe insbesondere bei den monokotylen Unkrautarten.

Tabelle 6

| Herbizid | Dosis kg a.i./ha | herbizide Wirkung in % AVF | ALM |
|---|---|---|---|
| I a | 1 | 83 | 75 |
| | 0,5 | 30 | 25 |
| | 0,25 | 15 | 20 |
| IV a | 0,5 | 15 | 20 |
| | 0,25 | 10 | 0 |
| IV b | 0,5 | 5 | 30 |
| | 0,25 | 0 | 10 |
| IV c | 0,5 | 15 | 35 |
| | 0,25 | 10 | 15 |
| I a + IV a | 1 + 0,5 | 90 (85) | 95 (80) |
| | 0,5 + 0,5 | 50 (40) | 50 (40) |
| | 0,25 + 0,5 | 40 (27) | 40 (36) |

Tabelle 6 (Fortsetzung)

| Herbizid | Dosis kg a.i./ha | herbizide Wirkung in % AVF | ALM |
|---|---|---|---|
| I a + IV a | 1 + 0,25 | 85 (84) | 93 (75) |
| | 0,5 + 0,25 | 65 (37) | 75 (25) |
| | 0,25 + 0,25 | 25 (23) | 40 (20) |
| I a + IV b | 1 + 0,5 | 97 (84) | 98 (80) |
| | 0,5 + 0,5 | 55 (34) | 78 (47) |
| | 0,25 + 0,5 | 35 (20) | 30 (44) |
| I a + IV b | 1 + 0,25 | 94 (83) | 93 (78) |
| | 0,5 + 0,25 | 65 (30) | 60 (33) |
| | 0,25 + 0,25 | 25 (15) | 30 (28) |
| I a + IV c | 1 + 0,5 | 94 (85) | 89 (83) |
| | 0,5 + 0,5 | 60 (40) | 70 (51) |
| | 0,25 + 0,5 | 30 (28) | 30 (48) |
| I a + IV c | 1 + 0,25 | 90 (84) | 80 (79) |
| | 0,25 + 0,25 | 45 (37) | 50 (36) |
| | 0,125+ 0,25 | 30 (23) | 40 (32) |

IVa : Verbindung der Formel IV mit $R_3$ = H und $(R_4)_n$ = 2,4—Cl ; m = 0
IVb : Verbindung der Formel IV mit $R_3$ = H und $(R_4)_n$ = 2—$CH_3$ ; 4—Cl, m = 0
IVc : Verbindung der Formel IV mit $R_3$ = $CH_3$ und $(R_4)_n$ = 2—$CH_3$, 4—Cl ; m = 0.

Beispiel 7

Analog zu Beispiel 6 wurden annuelle Unkräuter und Ungräser mit den Einzelwirkstoffen und den erfindungsgemäßen Kombinationen behandelt.

Wie Tabelle 7 zeigt, weisen die erfindungsgemäßen Kombinationen auch bei Verwendung der Komponenten VII und VIII eine den Einzelwirkstoffen überlegene, synergistische Herbizidwirkung sowohl bei mono-als auch bei dikotylen Unkräutern auf.

Tabelle 7

| Herbizid | Dosis kg a.i./ha | herbizide Wirkung in % AVF | ECG | CRS |
|---|---|---|---|---|
| Ia | 0,5 | 60 | 70 | 80 |
| | 0,25 | 10 | 25 | 60 |
| | 0,125 | 0 | 10 | 10 |
| VIIa | 0,006 | 50 | 70 | - |
| VIIIa | 0,015 | 60 | 30 | 60 |

Tabelle 7 (Fortsetzung)

| Herbizid | Dosis kg a.i./ha | herbizide Wirkung in % AVF | ECG | CRS |
|---|---|---|---|---|
| Ia + VIIa | 0,5 + 0,006 | 90 (80) | 100 (91) | - |
| | 0,25 + 0,006 | 80 (55) | 98 (78) | - |
| | 0,125+ 0,006 | 70 (50) | 90 (73) | - |
| Ia + VIIIa | 0,5 + 0,015 | 90 (84) | 100 (79) | 99 (92) |
| | 0,25 + 0,015 | 85 (64) | 99 (48) | 95 (84) |
| | 0,125+ 0,015 | 75 (60) | 70 (37) | 90 (64) |

VIIa : Verbindung der Formel VII mit $R_{10}$, $R_{11}$, $R_{12}$ = $CH_3$
VIIIa : Isopropylammoniumsalz der Verbindung der Formel VIII

Abkürzungen :
AVF = Avena fatua
ECG = Echinochloa crus galli
CRS = Chrysanthemum segetum

**Patentansprüche**

1. Herbizide Mittel, dadurch gekennzeichnet, daß sie einen Wirkstoff der Formel I

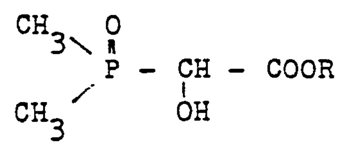

(I)

worin R = Wasserstoff oder Alkyl, das gegebenenfalls ein oder mehrfach durch Halogen, Hydroxy, ($C_1$-$C_4$)Alkoxy oder ($C_1$-$C_4$)Alkoxycarbonyl substituiert ist, bedeutet, oder deren Salze in Kombination mit einer Verbindung der Formel II,

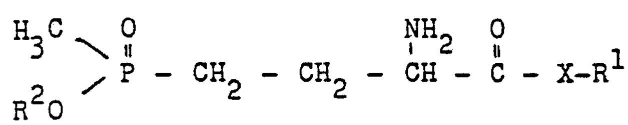

(II)

worin
X = 0 oder NH, wobei im Falle X = 0
$R^1$ = Wasserstoff, ($C_1$-$C_4$)Alkyl, gegebenenfalls substituiertes Ammonium, oder ein Metall-Kation und im Falle X = NH
$R^1$ = der Rest-$CH(CH_3)$—CONH—$CH(CH_3)$—COOH und dessen Salze bedeutet, und unabhängig von der Bedeutung von X
$R^2$ = Wasserstoff, gegebenenfalls substituiertes Ammonium oder ein Metall-Kation bedeuten, oder deren Säureadditionssalze
oder mit einer Verbindung der Formel III

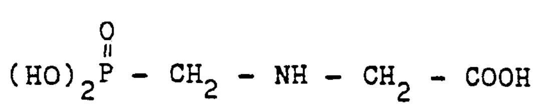

(III)

oder deren Salze und Esterverbindungen
oder mit einer Verbindung der Formel (IV)

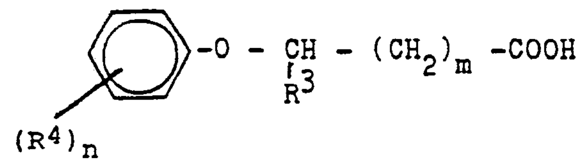

(IV)

worin
$R^3$ = H oder Methyl
$R^4$ = bei gleicher oder verschiedener Bedeutung Methyl oder Chlor
n = die Zahl 2 oder 3 und
m = die Zahl 0 oder 2 bedeutet
oder deren Salze und Esterverbindungen
oder mit einer Verbindung der Formel V,

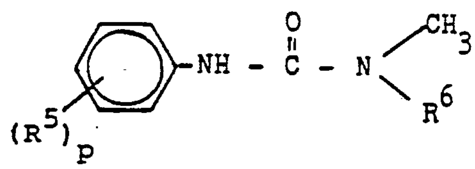

(V)

worin
$R^5$ = bei gleicher oder verschiedener Bedeutung Chlor, Brom, Methyl oder Methoxy
$R^6$ = Methyl oder Methoxy und
p = die Zahl 1 oder 2 bedeutet,
oder mit einer Verbindung der Formel VI,

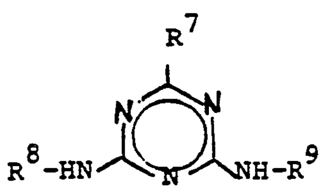

(VI)

worin
$R^7$ = Chlor, Methylthio oder Methoxy
$R^8$, $R^9$ = unabhängig voneinander $(C_1$-$C_4)$Alkyl bedeuten
oder mit einer Verbindung der Formel VII,

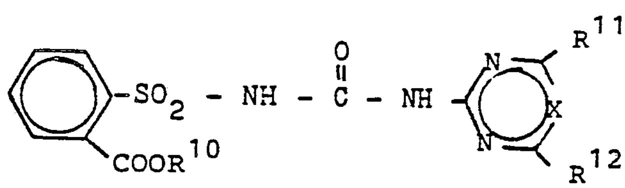

(VII)

worin
$R^{10}$ = $(C_1$-$C_4)$Alkyl bedeutet
$R^{11}$, $R^{12}$ = unabhängig voneinander $(C_1$-$C_2)$Alkyl oder $(C_1$-$C_2)$-Alkoxy und
X = CH oder N bedeutet,
oder mit einer Verbindung der Formel VIII,

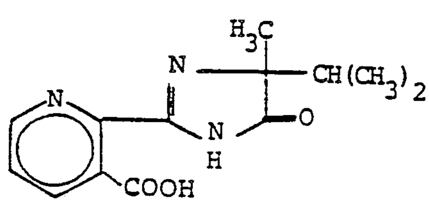

(VIII)

oder deren Salze, enthalten.

2. Herbizide Mittel, gemäß Anspruch 1, dadurch gekennzeichnet, daß das Mischungsverhältnis der Verbindungen der Formel I zu den Verbindungen der Formel II bis VIII im Bereich zwischen 90 : 1 bis

1 : 10 variiert.

3. Herbizide Mittel gemäß Ansprüchen 1 oder 2, dadurch gekennzeichnet, daß das Mischungsverhältnis der Verbindung der Formel I zu den Verbindungen der Formel II bis VIII im Bereich zwischen 40 : 1 und 1 : 5 variiert.

4. Verfahren zur Bekämpfung von Schadpflanzen, dadurch gekennzeichnet, daß man auf diese oder die Anbaufläche ein herbizides Mittel gemäß Ansprüchen 1 bis 3 in einer wirksamen Menge appliziert.

5. Verwendung von herbiziden Mitteln gemäß Ansprüchen 1 bis 3 zur Bekämpfung von Schadpflanzen.

## Claims

1. A herbicidal agent which contains an active compound of the formula I

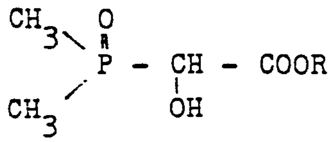

(I)

in which R denotes hydrogen or alkyl which is optionally monosubstituted or polysubstituted by halogen, hydroxyl, $(C_1-C_4)$-alkoxy or $(C_1-C_4)$-alkoxycarbonyl or salts thereof, in combination with a compound of the formula II

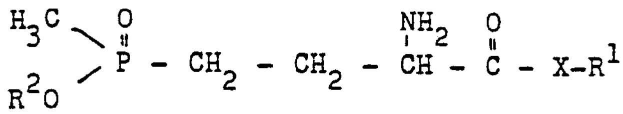

(II)

in which

X denotes O or NH, and, in the event that X is O,

$R^1$ denotes hydrogen, $(C_1-C_4)$-alkyl, optionally substituted ammonium or a metal cation, and, in the event that X is NH,

$R^1$ denotes the radical —$CH(CH_3)$—CONH—$CH(CH_3)$—COOH and salts thereof, and, irrespective of the meaning of X,

$R^2$ denotes hydrogen, optionally substituted ammonium or a metal cation, or acid addition salts thereof, or in combination with a compound of the formula III

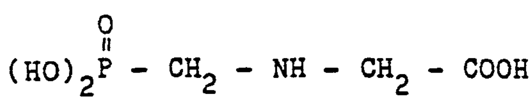

(III)

or salts and ester compounds thereof, or in combination with a compound of the formula (IV)

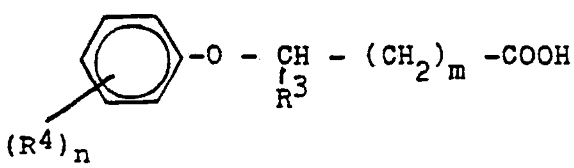

(IV)

in which

$R^3$ denotes H or methyl,

the $R^4$s, whether identical or different, denote methyl or chlorine,

n denotes the number 2 or 3 and

m denotes the number 0 or 2,

or salts and ester compounds thereof,

or in combination with a compound of the formula V

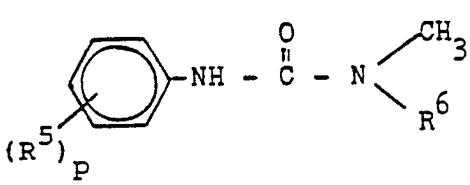

(V)

in which

the $R^5$s, whether identical or different, denote chlorine, bromine, methyl or methoxy,

$R^6$ denotes methyl or methoxy and

p denotes the number 1 or 2, or in combination with a compound of the formula VI

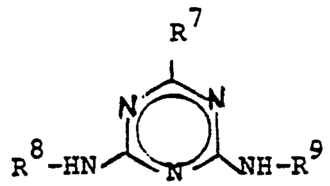

(VI)

in which

$R^7$ denotes chlorine, methylthio or methoxy, and

$R^8$ and $R^9$ independently of one another denote $(C_1-C_4)$-alkyl, or in combination with a compound of the formula VII

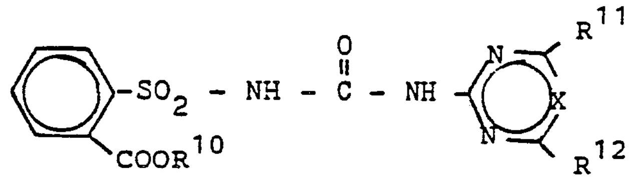

(VII)

in which

$R^{10}$ denotes $(C_1-C_4)$-alkyl,

$R^{11}$ and $R^{12}$ independently of one another denote $(C_1-C_2)$-alkyl or $(C_1-C_2)$-alkoxy and

X denotes CH or N,

or in combination with a compound of the formula VIII

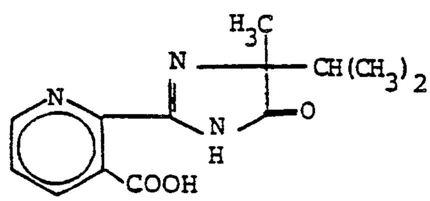

(VIII)

or salts thereof.

2. A herbicidal agent as claimed in claim 1, wherein the mixing ratio of the compounds of the formula I to the compounds of the formula II to VIII varies within the range between 80 : 1 and 1 : 10.

3. A herbicidal agent as claimed in claim 1 or 2, wherein the mixing ratio of the compound of the formula I to the compounds of the formula II to VIII varies within the range between 40 : 1 and 1 : 5.

4. A process for the control of weeds, which comprises applying an effective amount of a herbicidal agent as claimed in any of claims 1 to 3 to these weeds or to the cultivated area.

5. The use of a herbicidal agent as claimed in any of claims 1 to 3 for the control of weeds.

**Revendications**

1. Produits herbicides caractérisés en ce qu'ils contiennent une matière active répondant à la formule I

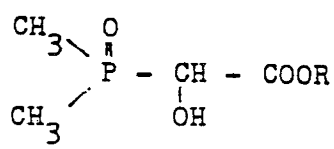

(I)

dans laquelle R représente l'hydrogène ou un radical alkyle qui porte éventuellement un ou plusieurs substituants pris dans l'ensemble constitué par les halogènes, l'hydroxy, les alcoxy en $C_1$-$C_4$ et les alcoxy-carbonyles à alcoxy en $C_1$-$C_4$, ou l'un de ses sels, associée à un composé répondant à la formule II,

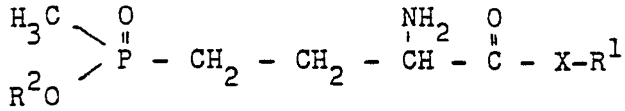

(II)

dans laquelle

X représente O ou NH,

$R^1$ représente dans le cas où X désigne O : l'hydrogène, un alkyle en $C_1$-$C_4$, un radical ammonium éventuellement substitué ou un cation métallique, et dans le cas où X désigne NH : le radical —$CH(CH_3)$—CONH—$CH(CH_3)$—COOH ou un sel de ce radical, et

$R^2$ représente, indépendamment de la signification de X, l'hydrogène, un ammonium éventuellement substitué ou un cation métallique, ou à l'un des sels d'addition que forme ce composé avec des acides.

ou à un composé répondant à la formule III

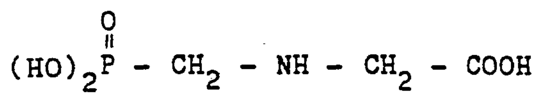

(III)

ou à un sel ou à un ester d'un tel composé,

ou à un composé répondant à la formule (IV) :

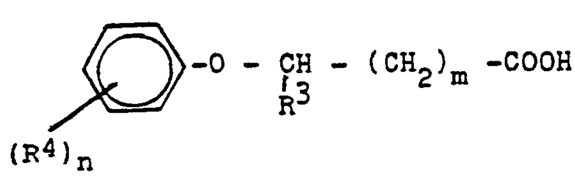

(IV)

dans laquelle

$R_3$ représente H ou un méthyle,

les $R^4$ représentent chacun, indépendamment l'un de l'autre, un méthyle ou le chore,

n désigne le nombre 2 ou 3 et

m désigne le nombre 0 ou 2,

ou à un sel ou à un ester d'un tel composé,

ou à un composé répondant à la formule V :

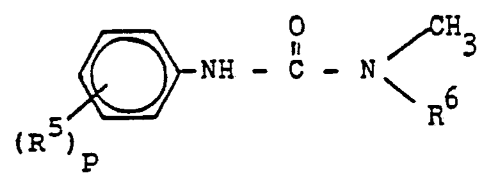

(V)

dans laquelle

$R^5$ représente, ou les $R^5$ représentent chacun indépendamment l'un de l'autre, le chlore, le brome, un méthyle ou un méthoxy,

$R^6$ représente un méthyle ou un méthoxy et p désigne le nombre 1 ou 2,

ou à un composé répondant à la formule VI

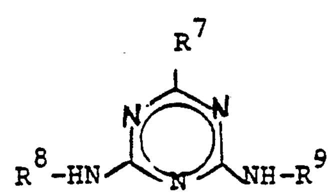

(VI)

dans laquelle

$R^7$ représente le chlore, un méthylthio ou un méthoxy et

$R^8$ et $R^9$ représentent chacun, indépendamment l'un de l'autre, un alkyle en $C_1$-$C_4$,

ou à un composé répondant à la formule VII :

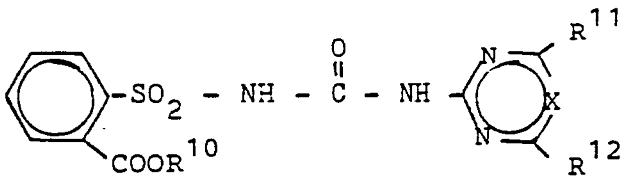

(VII)

dans laquelle

$R^{10}$ représente un alkyle en $C_1$-$C_4$,

$R^{11}$ et $R^{12}$ représentent chacun, indépendamment l'un de l'autre, un alkyle en $C_1$-$C_2$ ou un alcoxy en $C_1$-$C_2$, et

X représente CH ou N,

ou à un composé de formule VIII :

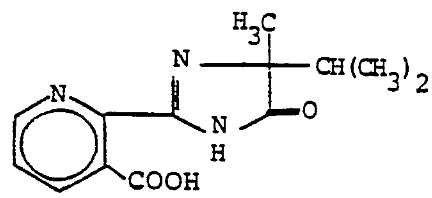

(VIII)

ou à l'un de ses sels.

2. Produits herbicides selon la revendication 1, caractérisés en ce que le rapport quantitatif, dans le mélange, entre les composés de formule I et les composés de formules II à VIII est situé dans l'intervalle allant de 80 : 1 à 1 : 10.

3. Produits herbicides selon l'une des revendications 1 et 2, caractérisés en ce que le rapport quantitatif, dans le mélange, entre le composé de formule I et les composés de formules II à VIII est situé dans l'intervalle allant de 40 : 1 à 1 : 5.

4. Procédé pour combattre des plantes nuisibles, caractérisé en ce qu'on applique sur celles-ci, ou sur la surface cultivée, un produit herbicide selon l'une quelconque des revendications 1 à 3, en une quantité efficace.

5. Application de produits herbicides selon l'une quelconque des revendications 1 à 3 à la lutte contre des plantes nuisibles.